# EUROPÄISCHE PATENTSCHRIFT

(11) **EP 2 806 199 B1**
(45) Veröffentlichungstag und Bekanntmachung des Hinweises auf die Patenterteilung: **09.01.2019**
(21) Anmeldenummer: 14178448.8
(22) Anmeldetag: 05.04.2007
(51) Int. Cl.: H02G 3/22, F16L 5/04, E04G 15/06

(54) **Leitungsdurchführung**
Cable bushing
Passage de câble

(30) Priorität: 19.04.2006 DE 102006000184
(43) Veröffentlichungstag der Anmeldung: 26.11.2014
(62) Teilanmeldung aus: 07105785.5
(73) Patentinhaber: HILTI Aktiengesellschaft, 9494 Schaan (LI)
(72) Erfinder: Monden, Thomas, 87778 Stetten (DE); Kögler, Markus, 86916 Kaufering (DE); Fischer, Marco, Denver, CO Colorado 80247 (US)
(74) Vertreter: Hilti Aktiengesellschaft Corporate Intellectual Property

(56) Entgegenhaltungen:
- DE-A1- 1 957 402
- US-A- 4 669 244
- US-A- 4 746 023
- US-A- 4 894 966
- US-A- 5 954 345
- US-A1- 2003 192 269

## Beschreibung

Die Erfindung betrifft eine Leitungsdurchführung, der im Oberbegriff von Patentanspruch 1 genannten Art. Derartige Leitungsdurchführungen dienen dem Durchführen von Leitungen, wie z. B. Rohrleitungen, Kabeln oder Kabelkanälen, durch Bauteile, wie z. B. durch Decken oder Wände.

Derartige Leitungsdurchführungen werden beim Erstellen eines Bauteils, wie einer Wand oder einer Decke, in dieses eingebaut. Insbesondere können die Leitungsdurchführungen in Betondecken oder -wände eingegossen werden. Vorzugsweise sind derartige Leitungsdurchführungen mit einer Brandschutzfunktion ausgerüstet. Vom Zeitpunkt des Einbaus bzw. Eingiessens in das Bauteil über die Installation der Leitung durch die Leitungsdurchführung bis hin zur Fertigstellung des Gebäudes besteht daher bereits ein Brandschutz. Wichtig bei derartigen Leitungsdurchführungen ist deren interne Dichtigkeit gegen flüssige Medien, wie z. B. Wasser.

Aus der US 2004/0016190 A1 ist eine Vorrichtung zum Durchführen von Leitungen bekannt, die ein Hüllrohr und ein, mit dem Hüllrohr verbindbares Basisteil aufweist. Das Basisteil weist einen, eine Durchführöffnung umgebenden Aufnahmeraum für ein Abschottmittel auf. Das Abschottmittel ist eine intumeszierende Masse, die im Brandfall expandiert und die Durchführöffnung verschliesst. Zwischen dem Abschottmittel und einer Schulter ist eine ringförmige, membranartige Dichtung aus einem elastomeren Material angeordnet, die eine Öffnung aufweist, die kleiner ist als die Durchführöffnung des Hüllrohres.

Von Nachteil bei dieser Vorrichtung ist, dass insbesondere im Falle der Installation in einer Decke über die vorhandene Dichtung keine absolute interne Dichtigkeit zur durchgeführten Leitung hergestellt werden kann. So kann auf der Decke stehende Flüssigkeit entlang der Naht zwischen Leitungsdurchführung und hindurchgeführter Leitung die Leitungsdurchführung passieren. Dieses ist insbesondere während der Bauphase eines Gebäudes problematisch.

In der DE 1 957 402 wird einen Durchlass für Hausanschlüsse in Mauern für Häuser in Form einer Röhre beschrieben, die an ihren beiden Enden mit elastischen Wänden versehen ist, die Öffnungen für Hausanschlüsse aufweisen.

Die US 4 669 244 A offenbart eine Dichtung für eine Öffnung zum Durchführen einer Leitung. Die Dichtung umfasst dabei ein erstes rundes Gehäuseteil und ein zweites rundes Gehäuseteil, die ineinandergesteckt werden können. Jedes Gehäuseteil weist Endkappen auf, wobei jede Endkappe innere und äußere Wände sowie eine mittlere Öffnung aufweist.

Das Dokument US 4 894 966 A offenbart eine Brandschutzvorrichtung mit einem Metallgehäuse und zwei Seitenwänden mit gleichseitigen Öffnungen und einer ringförmigen Außenwand, die sich zwischen den Seitenwänden nach außen von den Öffnungen erstreckt und einen nach innen offenen ringförmigen Kanal bildet. Das Gehäuse weist Halterungen zum Verbinden der Vorrichtung mit einer Gebäudestruktur auf. Im Kanal befindet sich ein intumeszierendes Material. Eine elastische Dichtung erstreckt sich von dem Gehäuse und weist eine ringförmige innere Wand auf, die sich nach innen über das intumeszierende Material hinaus erstreckt.

In der US 2003/192269 wird eine Brandschutzvorrichtung zum Bereitstellen eines Durchgangs in einer Trennwand beschrieben, durch die Drähte, Kabel, Rohre und dergleichen verlaufen. Das Gehäuse umfasst einen Steigabschnitt mit zerbrechlichen Verbindungen, die durch den Anwender leicht entfernbare Bänder definieren, um die Höhe der Brandschutzvorrichtung optimal auf die Gegebenheiten einstellen zu können.

Der vorliegenden Erfindung liegt daher die Aufgabe zugrunde, eine Leitungsdurchführung zum Durchführen von Leitungen durch Bauteile bereitzustellen, die im installierten Zustand und mit hindurchgeführter Leitung eine verbesserte Wasserdichtigkeit bietet.

Erfindungsgemäss wird die Aufgabe dadurch gelöst, dass ein weiteres ringförmiges, membranartiges Dichtelement an einem zweiten Ende des Hüllrohres angeordnet ist, wodurch eine nahezu absolute Dichtigkeit gewährleistet ist, wenn eine Leitung durch die Leitungsdurchführung hindurchgeführt ist. Ein weiterer Vorteil dieser zweiten Dichtebene, insbesondere im Falle von Deckendurchführungen, besteht darin, dass der Randspalt zwischen dem Hüllrohr und der durchgeführten Rohrleitung nach oben hin verschlossen wird. Das hat zur Folge, dass weder Feuchtigkeit noch Schutz irgendeiner Art in diesen Randspalt eindringen kann und somit das Entstehen und Wachstum von gesundheitsschädlichem Schimmel vollständig unterbunden werden kann.

Es ist ferner erfindungsgemäß, dass das weitere membranartige Dichtelement in einem steifen Ringkörper angeordnet ist, der an das zweite Ende des Hüllrohres anbringbar ist. Demnach bilden das Dichtelement und der Ringkörper ein Modul, das bedarfsweise an das Hüllrohr anbringbar ist, wodurch eine flexible Anpassung der Leitungsdurchführung an die geforderte Dichtigkeit möglich ist.

Günstig ist es auch, wenn der steife Ringkörper in seiner Lage am zweiten Ende des Hüllohres über ein, mit dem Hüllrohr verbindbares ringförmiges Festlegeteil fixierbar ist. Das ringförmige Festlegeteil kann dabei auch ein Deckelelement sein, über welches die Leitungsdurchführung verschliessbar ist, solange keine Leitung durch diese hindurchgeführt ist. Vorzugsweise weist das Hüllrohr ein Aussengewinde auf, das mit einem zweiten Innengewinde des ringförmigen Festlegeteils verschraubbar ist, um dieses an dem Hüllrohr festzulegen. Auf diese Weise ist das Modul mit dem Ringkörper und dem weiteren Dichtelement einfach an dem Hüllrohr zu montieren.

Vorteilhaft ist der steife Ringkörper aus einem Hartkunststoff gefertigt, wodurch eine einfache Montage gewährleistet wird. Ferner kann durch die Materialkombination Kunststoffhüllrohr und Kunststoffringkörper auch eine wasserdichte Verbindung zwischen Hüllrohr und dem steifen Ringkörper gewährleistet werden. Des Weiteren weist ein Hartkunststoff produktionstechnische Vorteile auf, wie die effiziente Herstellbarkeit bei mechanischer Stabilität, und bietet auch für die angestrebte Lebensdauer der Leitungsdurchführung eine sichere Funktion ohne jegliche Korrosionsgefahr und damit Beeinträchtigung der Brandschutzfunktion.

Optimale Dichtungseigenschaften werden mit einem aus einem gummielastischen Material bestehenden membranartigen Dichtelement erzielt, welches sich bei der Durchführung der Leitung durch die Leitungsdurchführung nahtlos dichtend an die Oberfläche der Leitung anlegen kann.

Günstig herstellbar ist das Modul, wenn das membranartige Dichtelement stoffschlüssig innen am steifen Ringkörper festgelegt ist. Das membranartige Dichtelement kann demnach z. B. durch Vulkanisieren oder Kleben mit dem Ringkörper zu einer Einheit verbunden sein.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Die Erfindung umfasst unter anderem folgende Aspekte:
1) Eine Leitungsdurchführung (10) zum Durchführen von Leitungen durch ein Bauteil (30), mit einem Hüllrohr (11), mit einem an einem ersten axialen Ende (12) des Hüllrohres (11) angeordneten Basisteil (16), das einen eine Durchführöffnung (17) umgebenden Aufnahmeraum (18) für ein Abschottmittel (19) aufweist, und mit einem ringförmigen, membranartigen Dichtelement (14), das an dem ersten axialen Ende (12) des Hüllrohres (11) angeordnet ist, wobei ein weiteres ringförmiges, membranartiges Dichtelement (15) an einem zweiten Ende (13) des Hüllrohres (11) angeordnet ist.
2) Eine Leitungsdurchführung nach Aspekt 1), wobei das weitere membranartige Dichtelement (15) in einem steifen Ringkörper (20) angeordnet ist, der an das andere Ende (13) des Hüllrohres (11) anbringbar ist.
3) Eine Leitungsdurchführung nach Aspekt 2), wobei der steife Ringkörper (20) in seiner Lage am anderen Ende (13) des Hüllohres (11) über ein, mit dem Hüllrohr (11) verbindbares ringförmiges Festlegeteil (21) fixierbar ist.
4) Eine Leitungsdurchführung nach Aspekt 2) oder Aspekt 3), wobei der steife Ringkörper (20) aus einem Hartkunststoff gefertigt ist.
5) Eine Leitungsdurchführung nach einem der Aspekte 2 bis 4, wobei das membranartige Dichtelement (15) aus einem gummielastischen Material besteht.
6) Eine Leitungsdurchführung nach einem der Aspekte 2 bis 5, wobei das membranartige Dichtelement (15) stoffschlüssig innen am steifen Ringkörper (20) festgelegt ist.

Es zeigen:
- Fig. 1: eine Leitungsdurchführung mit einem Hüllrohr in einer Wand, im Längsschnitt,
- Fig. 2: ein Detail der Leitungsdurchführung aus Fig. 1 in Aufsicht.

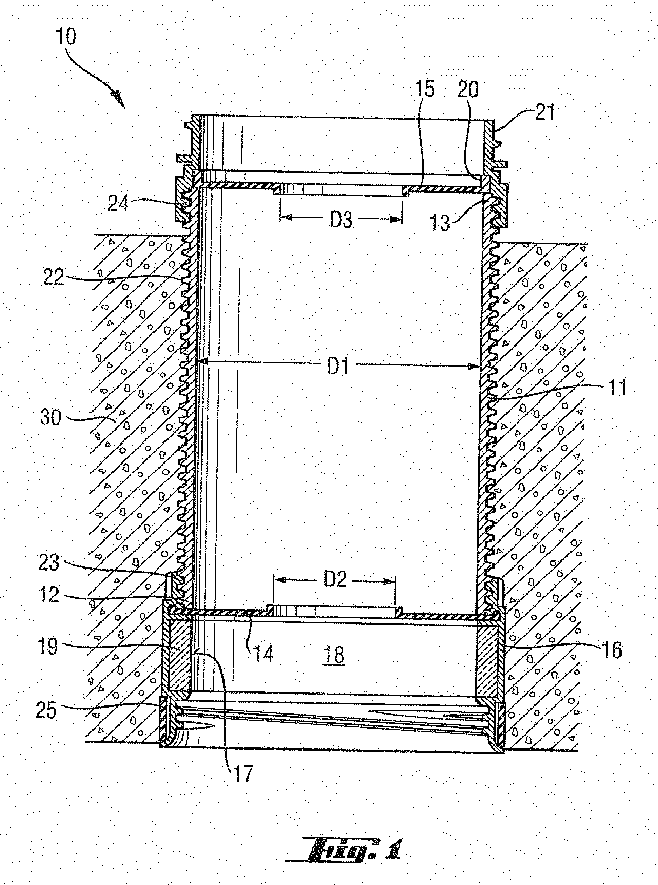

Eine aus Fig. 1 ersichtliche und in einem Bauteil 30, wie z. B. einer Betonwand, angeordnete Leitungsdurchführung 10 umfasst ein Hüllrohr 11 mit einem Aussengewinde, das sich über die gesamte Längserstreckung des Hüllrohres 11 erstreckt. Weiter umfasst die Leitungsdurchführung 11 ein Basisteil 16, das einen, eine Durchführöffnung 17 umgebenden Aufnahmeraum 18 für ein Abschottmittel 19 aufweist. Das Abschottmittel 19 ist z. B. ein Ring aus intumeszierendem Material und stellt den Brandschutz der Leitungsdurchführung 10 sicher. Über einen Dichtring 25 der aussen an dem Basisteil 16 angeordnet ist wird eine Aussenabdichtung zum umgebenden Bauteil 30 erreicht.

Die Leitungsdurchführung 10 ist in den Figuren als Eingiessteil ausgebildet, das vor der Erstellung eines Bauteils 30 in Form einer Betonwand an einer in den Figuren nicht dargestellten Schalung festlegbar ist und beim Ausgießen der Schalung mit Beton in dem Bauteil 30 eingebettet wird. Dazu ist an dem Basisteil 16 ein in den Figuren nicht sichtbarer Flansch vorhanden, der Befestigungsöffnungen aufweist, an denen das Basisteil 16 über Nägel o. ä. an der Schalung festlegbar ist.

Das Basisteil 16 weist ein erstes Innengewinde 23 auf, über welches das Basisteil 16 an einem ersten Ende 12 des Hüllrohres 11 mit dessen Aussengewinde 22 verschraubt ist. Zwischen dem Basisteil 16 und dem Hüllrohr 11 ist ein ringförmiges, membranartiges Dichtelement 14 aus einem gummielastischen Material angeordnet, das einen Innendurchmesser D2 aufweist, der kleiner ist als ein Innendurchmesser D1 des Hüllrohres 11. Dieses membranartige Dichtelement 14 definiert eine erste Dichtebene der Leitungsdurchführung 10.

An einem zweiten axialen Ende 13 des Hüllrohres 11 ist eine weiteres ringförmiges, membranartiges Dichtelement 15 aus einem gummielastischen Material angeordnet, das einen Innendurchmesser D3 aufweist, der ebenfalls kleiner ist als ein Innendurchmesser D1 des Hüllrohres 11 und der innerhalb der Fertigungstoleranzen dem Innendurchmesser D2 des anderen membranartigen Dichtelementes 14 entspricht. Dieses weitere membranartige Dichtelement 15 definiert eine zweite Dichtebene der Leitungsdurchführung 10.

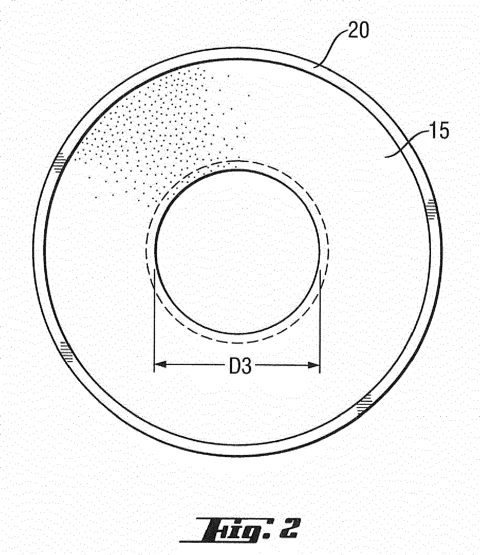

Wie insbesondere Fig. 2 zu entnehmen ist, ist die zweite membranartige Dichtung 15 in einem steifen Ringkörper 20 aus Hartkunststoff angeordnet, mit dem sie stoffschlüssig, z. B. durch Vulkanisieren oder Verkleben, zu einem Modul verbunden ist. Über ein ringförmiges Festlegeteil 21, das ebenfalls als Verschlusskappe oder Deckelteil ausgebildet sein kann und das ein zweites Innengewinde 24 aufweist, das mit dem Aussengewinde 22 des Hüllrohres 11 verschraubt ist, ist der Ringkörper 20 an dem Hüllrohr 11 festgelegt, wie aus Fig. 1 ersichtlich.

Beim Hindurchführen einer Leitung, wie z. B. eines in den Figuren nicht dargestellten Rohres, durch die Durchführöffnung 17 der Leitungsdurchführung 10 werden die beiden membranartigen Dichtelemente 14, 15 geweitet und legen sich filmartig dichtend an die Oberfläche der Leitung an. Dabei weist die Leitung einen Durchmesser auf, der vorzugsweise im Wesentlichen dem Innendurchmesser D1 des Hüllrohres 11 entspricht. Es wird eine nahezu absolut dichte Durchführung der Leitung durch die Leitungsdurchführung 10 erreicht. Die Dichtelemente 14, 15 können dabei an ihren Öffnungen Kragen aufweisen, um ausreichende Kontaktflächen auch bei geringer Weitung zu erreichen.

## Patentansprüche

1. Leitungsdurchführung (10) zum Durchführen von Leitungen durch ein Bauteil (30), mit einem steifen Ringkörper (20), mit einem Hüllrohr (11), mit einem an einem ersten axialen Ende (12) des Hüllrohres (11) angeordneten Basisteil (16), das einen eine Durchführöffnung (17) umgebenden Aufnahmeraum (18) für ein Abschottmittel (19) aufweist, mit einem ringförmigen, membranartigen Dichtelement (14), das an dem ersten axialen Ende (12) des Hüllrohres (11) angeordnet ist, und mit einem weiteren ringförmigen, membranartigen Dichtelement (15), das an einem zweiten Ende (13) des Hüllrohres (11) angeordnet ist,
wobei
ein Abschottmittel (19) in dem Aufnahmeraum (18) angeordnet ist und wobei das weitere membranartige Dichtelement (15) in dem steifen Ringkörper (20) angeordnet ist, der an das andere Ende (13) des Hüllrohres (11) anbringbar ist.

2. Leitungsdurchführung nach Anspruch 1, **dadurch gekennzeichnet, dass** das Abschotttmittel (19) ein Ring aus intumeszierendem Material ist.

3. Leitungsdurchführung nach Anspruch 1 oder 2, **dadurch gekennzeichnet, dass** der steife Ringkörper (20) in seiner Lage am anderen Ende (13) des Hüllohres (11) über ein, mit dem Hüllrohr (11) verbindbares ringförmiges Festlegeteil (21) fixierbar ist.

4. Leitungsdurchführung nach einem der Ansprüche 1 bis 3, **dadurch gekennzeichnet, dass** der steife Ringkörper (20) aus einem Hartkunststoff gefertigt ist.

5. Leitungsdurchführung nach einem der Ansprüche 1 bis 4, **dadurch gekennzeichnet, dass** das membranartige Dichtelement (15) aus einem gummielastischen Material besteht.

6. Leitungsdurchführung nach einem der Ansprüche 1 bis 5, **dadurch gekennzeichnet, dass** das membranartige Dichtelement (15) stoffschlüssig innen am steifen Ringkörper (20) festgelegt ist.

## Claims

1. Conduit duct (10) for passing lines through a building component (30), comprising a rigid annular body (20), a cladding tube (11), a base part (16) arranged at a first axial end (12) of the cladding tube (11), which base part (16) includes a receiving chamber (18) for a shielding means (19) surrounding a passage opening (17), and comprising an annular, membrane-like sealing element (14) arranged at the first axial end (12) of the cladding tube (11) and a further annular, membrane-like sealing element (15) arranged at a second end (13) of the cladding tube (11), wherein
a shielding means (19) is arranged in the receiving chamber (18), and wherein the further membrane-like sealing element (15) is arranged in the rigid annular body (20) which can be mounted at the other end (13) of the cladding tube (11).

2. Conduit duct according to Claim 1, **characterised in that** the shielding means (19) is a ring formed of intumescent material.

3. Conduit duct according to Claim 1 or 2, **characterised in that** the rigid annular body (20) can be fixed in its place at the other end (13) of the cladding tube (11) by means of an annular fixing part (21) which is connectable to the cladding tube (11).

4. Conduit duct according to any one of Claims 1 to 3, **characterised in that** the rigid annular body (20) is produced from a hard plastics material.

5. Conduit duct according to any one of Claims 1 to 4, **characterised in that** the membrane-like sealing element (15) consists of a rubber-elastic material.

6. Conduit duct according to any one of Claims 1 to 5, **characterised in that** the membrane-like sealing element (15) is fixed to the inside of the rigid annular body (20) by a material joint.

## Revendications

1. Passage de conduite (10) pour faire passer des conduites à travers un élément de construction (30), comportant un corps annulaire rigide (20), un tube de gainage (11), un élément de base (16) agencé sur une première extrémité axiale (12) du tube de gainage (11), lequel élément de base comporte un espace de réception (18) entourant une ouverture traversante (17) pour des moyens de cloisonnement (19), un élément d'étanchéité annulaire analogue à une membrane (14) qui est agencé sur la première extrémité axiale (12) du tube de gainage (11), et un élément d'étanchéité annulaire supplémentaire analogue à une membrane (15) qui est agencé sur une seconde extrémité (13) du tube de gainage (11),
dans lequel des moyens de cloisonnement (19) sont agencés dans l'espace de réception (18) et dans lequel l'élément d'étanchéité supplémentaire analogue à une membrane (15) est agencé dans le corps annulaire rigide (20) qui peut être fixé sur l'autre extrémité (13) du tube de gainage (11).

2. Passage de conduite selon la revendication 1, **caractérisée en ce que** les moyens de cloisonnement (19) sont un anneau constitué d'une matière intumescente.

3. Passage de conduite selon la revendication 1 ou 2, **caractérisée en ce que** le corps annulaire rigide (20) peut être fixé dans sa position sur l'autre extrémité (13) du tube de gainage (11) par l'intermédiaire d'une partie de fixation annulaire (21) pouvant être reliée au tube de gainage (11).

4. Passage de conduite selon l'une des revendications 1 à 3, **caractérisée en ce que** le corps annulaire rigide (20) est fabriqué à partir d'une matière plastique dure.

5. Passage de conduite selon l'une des revendications 1 à 4, **caractérisée en ce que** l'élément d'étanchéité analogue à une membrane (15) est constitué d'une matière en caoutchouc élastique.

6. Passage de conduite selon l'une des revendications 1 à 5, **caractérisée en ce que** l'élément d'étanchéité analogue à une membrane (15) est fixé à l'intérieur du corps annulaire rigide (20) par liaison de matière.
